Europäisches Patentamt

European Patent Office

Office européen des brevets

(11) Publication number: **0 406 897 A2**

# EUROPEAN PATENT APPLICATION

(21) Application number: 90112957.7

(51) Int. Cl.⁵: **H04N 1/40**

(22) Date of filing: 06.07.90

(30) Priority: 07.07.89 JP 176821/89

(43) Date of publication of application:
09.01.91 Bulletin 91/02

(84) Designated Contracting States:
DE FR GB

(71) Applicant: FUJI PHOTO FILM CO., LTD.
210 Nakanuma Minamiashigara-shi
Kanagawa-ken, 250-01(JP)

(72) Inventor: Shimoyama, Yuji, c/o Fuji Photo Film
Co., Ltd.
798 Miyanodai, Kaisei-machi
Ashigarakami-gun, Kanagawa-ken 258(JP)
Inventor: Miyakawa, Tadashi, c/o Fuji Photo
Film Co., Ltd.
798 Miyanodai, Kaisei-machi
Ashigarakami-gun, Kanagawa-ken 258(JP)
Inventor: Shimazaki, Osamu, c/o Fuji Photo
Film Co., Ltd.
798 Miyanodai, Kaisei-machi
Ashigarakami-gun, Kanagawa-ken 258(JP)

(74) Representative: Patentanwälte Grünecker,
Kinkeldey, Stockmair & Partnerner
Maximilianstrasse 58
D-8000 München 22(DE)

(54) Method of correcting image signal.

(57) A plurality of successive different intensities of either light reflected from a white original irradiated with illuminating light from a light source, or illuminating light directly from the light source, or transmitted light from a transparent original irradiated with the illuminating light from the light source, are applied to an image sensor, and an output signal from the image sensor is converted into a digital signal to produce as many corrective original data as the number of the successive different intensities. Then, corrective data are produced from the corrective original data and reference data. An image on an original is thereafter photoelectrically read with the image sensor to produce an image signal and converting the image signal into digital image data. Image data are corrected using the digital image data and the corrective data.

EP 0 406 897 A2

# FIG.2

# METHOD OF CORRECTING IMAGE SIGNAL

## BACKGROUND OF THE INVENTION

The present invention relates to a method of correcting an image signal, and more particularly to a method of correcting an image signal to produce a high-quality image through the correction of photoelectric conversion characteristics of photoelectric transducers of an image sensor when image information is read using the image sensor.

Image scanning reading and reproducing systems are widely used in the printing and platemaking industries for electrically processing image information of originals or subjects to produce original film plates with a view to simplifying the entire process and improving the quality of printed images.

The image scanning reading and reproducing systems are basically constructed of an image reading apparatus and an image reproducing apparatus. In the image reading apparatus, image information of an original or subject which is fed in an auxiliary scanning direction is scanned by an image sensor in a main scanning direction substantially normal to the auxiliary scanning direction, and the scanned image information is converted to an electric signal. Then, the photoelectrically converted image information is processed for gradation correction, edge sharpness, etc. accord ing to platemaking conditions. Thereafter, the processed image signal is converted into a light signal such as a laser beam signal which is applied to and recorded on an image recording medium of a photosensitive material such as a photographic film in the image recording apparatus. The image recording medium with the image recorded thereon is developed by an image developing device and will be used as a film plate for printing.

The image sensor, which scans the original in the main scanning direction to read the image information in the image reading apparatus, comprises an array of several thousand photoelectric transducers arranged along the main scanning direction. Usually, the photoelectric transducers have respective different sensitivities and offset levels. The sensitivity of a photoelectric transducer is expressed as the ratio of the output level amplitude of the image sensor to the level of an input light intensity when the input light intensity level varies from a zero level (dark level) to a maximum level (bright level). The offset level of a photoelectric transducer is the output level of the image sensor when the input light intensity is of the dark level. If an image is read and reproduced with the photoelectric transducers not adjusted with respect to the sensitivities and offset levels thereof, striped brightness irregularities appear on the reproduced image.

One technical concept for solving the above problem is disclosed in Japanese Laid-Open Patent Publication No. 61(1986)-14702. According to the disclosed concept, as shown in FIG. 1a of the accompanying drawings, a dark output level (B2) of an image sensor is measured while no light is being applied to the image sensor, and a bright output level of the image sensor is also measured while input light of a maximum intensity level is being applied to the image sensor. Thereafter, a photoelectric conversion characteristic curve 2 which is obtained by linearly interpolating the two measured output levels is corrected into a photoelectric conversion characteristic curve 4 so that the offset level of each photoelectric transducer becomes zero and the output level thereof with respect to the bright input light intensity level is of a maximum value W1.

The output level amplitude of the image sensor, i.e., the photoelectric conversion characteristics thereof, with respect to a small input light intensity level amplitude is not expressed by a linear function as with the photoelectric conversion characteristic curve 2. In addition, the linear photoelectric conversion characteristics vary from photoelectric transducer to photoelectric transducer. For the above reasons, the output levels of image signals which are produced by the respective photoelectric transducers differ from each other in an intermediate density level between the dark and bright levels. Accordingly, striped brightness irregularities are caused to appear on the reproduced image due to such output level differences. The striped brightness irregularities are strongly observed especially when the image is enlarged and its edge is sharpened.

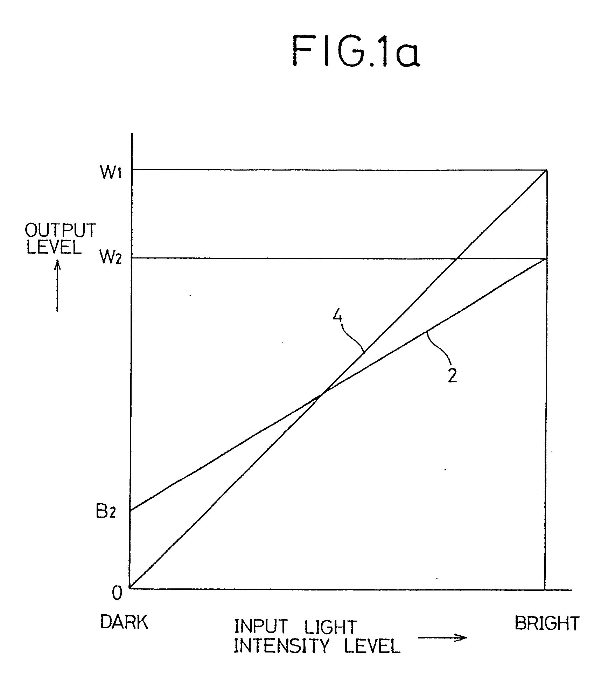

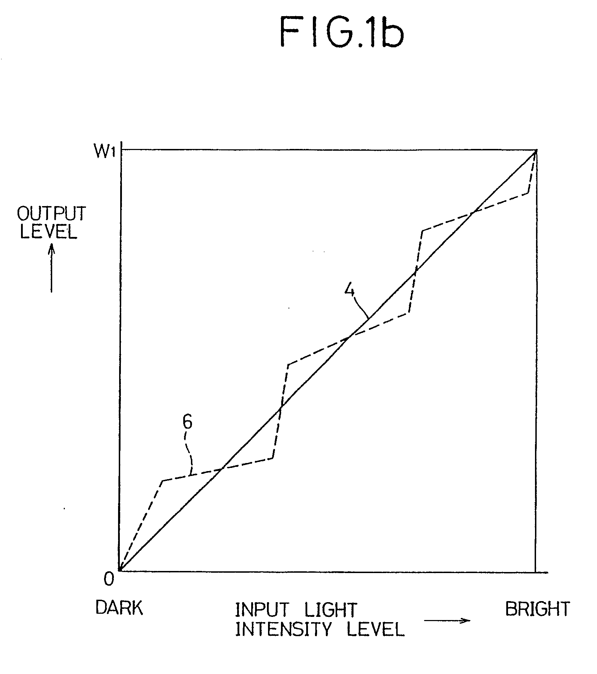

Japanese Laid-Open Patent Publication No. 63(1988)-136770 discloses a process of correcting different output levels of image signals due to different linearities of photoelectric transducers. According to the disclosed correcting process, when a photoelectric conversion characteristic curve is not linear as indicated by 6 in FIG. 1b of thee accompanying drawings, the density of a variable-density filter which is positioned between a white original and an image sensor is varied to obtain corrective data from output data of an A/D converter corresponding to an intermediate light intensity level for the image sensor, and the obtained corrective data are stored. When an image carried on an original is actually read, the read image data and the corrective data are processed to correct the output level of the image sensor into a characteristic curve 4 which is linearly proportional to the input light intensity level. In this manner, the quality of the reproduced image is improved.

However, the capacity of a memory required to store the correcting data is very large since it is commensurate with the product of the number of photoelectric transducers used, the number of quantizing levels of the A/D converter corresponding to the intermediate level, and the number of correcting data bits. Consequently, the cost of the apparatus which has such a correcting circuit is prohibitively high.

## SUMMARY OF THE INVENTION

It is an major object of the present invention to provide a method of correcting an image signal through efficient generation of corrective data based on the fact that photoelectric transducers of an image sensor have certain photoelectric conversion characteristics, so that the capacity of a memory required to store such corrective data is greatly reduced, and also through removal of differences in linearity between the photoelectric transducers and also of shading of a reading optical system, using the corrective data, so that high-quality images free from brightness irregularities can be reproduced.

Another object of the present invention is to provide a method of correcting an image signal in an apparatus for irradiating an original with illuminating light from a light source and applying light reflected or transmitted from the original to an image sensor to read an image on the original, the method comprising the steps of applying a plurality of successive different intensities of either light reflected from a white original irradiated with the illuminating light from the light source, or illuminating light directly from the light source, or transmitted light from a transparent original irradiated with the illu minating light from the light source, to the image sensor, converting an output signal from the image sensor into a digital signal to produce as many corrective original data as the number of the successive different intensities, then producing corrective data from the corrective original data and reference data, reading an image on an original with the image sensor to produce an image signal and converting the image signal into digital image data, and producing corrected image data from the digital image data and the corrective data.

Still another object of the present invention is to provide the method wherein three successive different intensities are applied to the image sensor, the corrective original data are three data corresponding to the three successive different intensities, the corrective data are produced from the three successive different intensities and the reference data.

Yet another object of the present invention is to provide the method wherein the corrective data are produced from data represented by two straight line segments and approximating the three corrective original data, and the reference data.

The above and other objects, features and advantages of the present invention will become more apparent from the following description when taken in conjunction with the accompanying drawings in which a preferred embodi ment of the present invention is shown by way of illustrative example.

## BRIEF DESCRIPTION OF THE DRAWINGS

FIGS. 1a and 1b are diagrams illustrative of conventional methods of correcting image signals;

FIG. 2 is a schematic perspective view, partly in block form, of an image scanning and reproducing system which carries out a method of correcting an image signal according to the present invention;

FIG. 3 is a block diagram of a signal corrector in the image scanning and reproducing system shown in FIG. 2; and

FIG. 4 is a diagram illustrative of the image signal correcting method according to the present invention.

## DETAILED DESCRIPTION OF THE PREFERRED EMBODIMENT

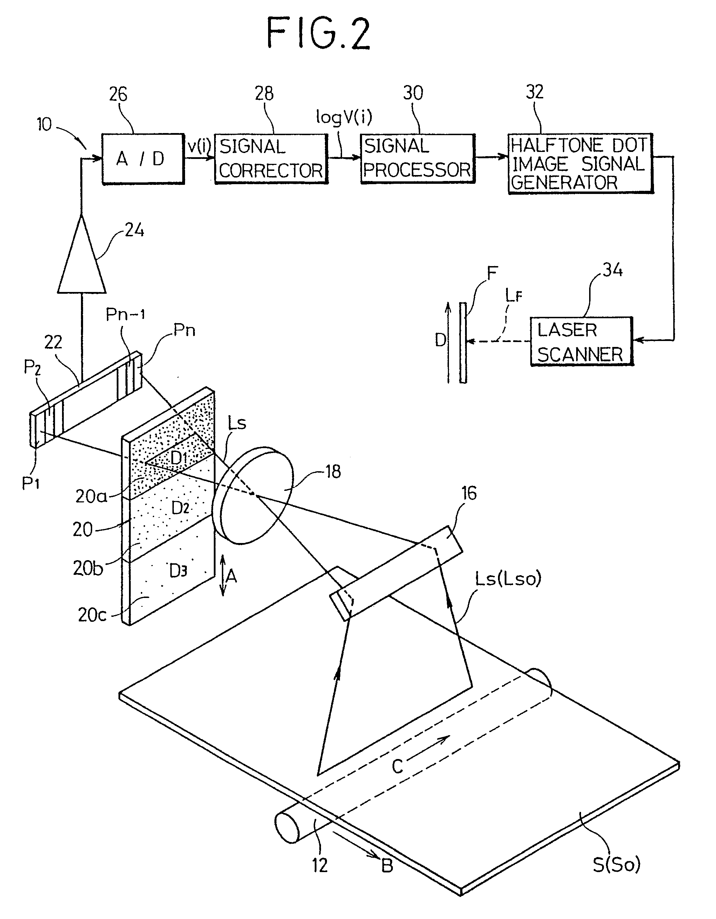

FIG. 2 shows an image scanning and reproducing system, generally denoted at 10, which carries out a method of correcting an image signal according to the present invention. In the image scanning and reproducing system 10, image information carried by an original or subject S is irradiated with illuminating light emitted from a light source 12. The intensity of light Ls which passes through the original S, is reflected by a mirror 16, and passes through the condenser lens 18 is converted into an intensity i by an ND filter 20, and the intensity i is photoelectrically read by a CCD image sensor 22 which serves as a line sensor and comprises an array of n photoelectric transducers Pa (a = 1 through n).

The ND filter 20 comprises three filters 20a through 20c of different densities D1 through D3, respectively, the filters 20a through 20c lying parallel to the direction in which the original S is scanned by the CCD image sensor 22. The filter densities D1 through D3 include a density D1 which corresponds to a substantially dark level, a density D2 which is close to a dark level, and a density D3 which corresponds to a substantially bright level. The ND filter 20 is driven by a drive source (not shown) to move in the direction indicated by the arrow A, which is perpendicular to the optical axis along which the light goes from the mirror 16 to the CCD image sensor 22. The original S is fed by a feed mechanism (not shown) in the auxiliary scanning direction indicated by the arrow B. At the same time, the original S is scanned by the CCD image sensor 22 in the main scanning direction indicated by the arrow C normal to the auxiliary scanning direction. In this manner, the original S is two-dimensionally scanned, so that image information over the entire surface of the original S is read.

An image signal which corresponds to the image information (indicated by the light intensity i) that has been photoelectrically converted by the CCD image sensor 22 is amplified by an amplifier 24 having a preset amplifica tion factor. The amplified image signal is then quantized by an A/D converter 26, i.e., converted into image data v(i) which are represented by a digital signal corresponding to the light intensity i. The image data v(i) are then applied to a signal corrector 28 and corrected thereby, after which the corrected image data are applied as output data log V(i) to a signal processor 30. The signal processor 30 processes the corrected image data for gradation correction, edge sharpness, etc., and the processed image data are sent to a halftone dot signal generator 32. In the halftone dot image signal generator 32 converts the image data into a binary signal based on a predetermined halftone dot signal, and the binary signal is thereafter applied to a laser scanner 34. The laser scanner 34 turns on and off a laser beam LF based on the binary signal. The laser beam LF which has been turned on and off is deflected by a beam deflector (not shown), and forms or reproduces a halftone dot image on a photographic film F. At this time, the halftone dot image is two-dimensionally reproduced on the photographic film F since the photographic film F is fed in the auxiliary scanning direction indicated by the arrow D and also scanned by the laser beam LF in the main scanning direction that is substantially normal to the auxiliary scanning direction.

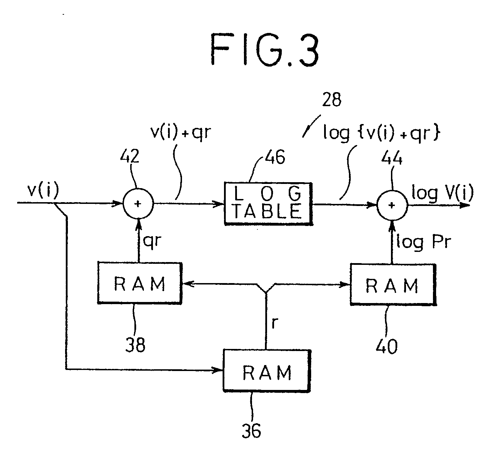

The signal corrector 28 is constructed as shown in FIG. 3. More specifically, the signal corrector 28 comprises first, second, and third RAMs 36, 38, 40, first and second adders 42, 44, and a LOG table 46. The digital image data v(i) sent from the A/D converter 26 are applied to one input terminal of the first RAM 36 and the first adder 42. Region indicating data r (r = 1 or 0) are transmitted, as output data from the first RAM 36, to the second RAM 38 and the third RAM 40. First corrective data qr (r = 1 or 0) are applied, as output data from the second RAM 38, to the other input terminal of the first adder 42. Output data from the first adder 42, i.e., data v(i) + qr which are the sum of the image data v(i) and the first corrective data qr, are delivered through the LOG table 46, as a logarithmic signal log {v(i) + qr}, to one input terminal of the second adder 44. The other input terminal of the second adder 44 is supplied with second corrective data log Pr (r = 1 or 0) from the third RAM 40. The second adder 44 therefore adds the logarithmic signal log {v(i) + qr} and the second corrective data log Pr, and sends the sum signal as output data log V(i) = log Pr • {v(i) + qr} to the signal processor 30.

The image scanning and reproducing system for carrying out an image signal correcting method according to the present invention is basically constructed as described above. Now, operation and advantages of the image scanning and reproducing system will be described below.

The region indicating data r (r = 1 or 0) to be stored in the first RAM 36, the first corrective data qr to be stored in the second RAM 38, and the second corrective data log Pr to be stored in the third RAM 40 are generated as follows:

First, a transparent original or subject So with no image carried thereon is placed instead of the original S which carried an image. The ND filter 20 is moved in the direction indicated by the arrow A, so that the intensity of transmitted light Lso is successively reduced to intensities i1, i2, i3 by the ND filter 20 which has the three successive densities D1 through D3.

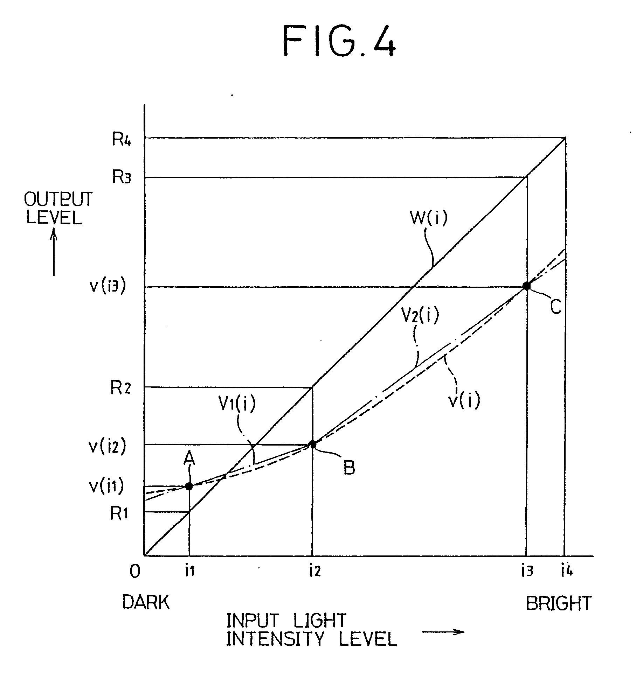

Then, image data v(i1), v(i2), v(i3) are produced which are three corrective original data, respectively, corresponding to output signals that are produced by the CCD image sensor 22 when it has detected the light intensities i1, i2, i3. More specifically, the transmitted light Lso from the transparent original So is applied through the mirror 16, the condenser lens 18, and the ND filter 20 to the CCD image sensor 22, which photoelectrically converts the light into a signal. The signal is then amplified by the amplified 24, and the amplified signal is converted by the A/D converter 26 into successive digital image data v(i1), v(i2), v(i3) as shown in FIG. 4.

The inventor has found out that while actual digital image data v(i) produced by the CCD image sensor 22 have photoelectric conversion characteristics as indicated by the dotted line in FIG. 4, the photoelectric conversion characteristics of the actual digital image data v(i) are approxi mated by data V1(i) indicative of a straight line segment passing through coordinates A = (i1, v(i1)) and B = (i2, v(i2)) and data V2(i) indicative of a straight line segment passing through coordinates B = (i2, v(i2)) and C = (i3, v(i3)). More specifically, the three image data v(i1), v(i2), v(i3) are produced on the basis of the three light intensities, i.e., the intensity i1 corresponding to the substantially dark level, the intensity i2 corresponding to a level which is closer to the dark level than an intermediate level between the bright and dark levels, and the intensity i3 corresponding to the substantially bright level, and the data V1(i), V2(i) approximating data between the coordinates A, B, C indicative of the three image data v(i1), v(i2), v(i3) are substantially equal to the digital image data v(i) which indicate the actual characteristics.

The region indicating data r to be stored in the first RAM 36 are selected such that a low level of 0 is stored when the digital image data v(i) are of a value of 0 (dark output value) or more and smaller than v(i2) with respect to the light intensity i, and a high level of 1 is stored when t he digital image data v(i) are of a value of v(i2) or higher and of a bright output value R4 or smaller, as indicated by the following equations (1) and (2):

$$0 \leq v(i) < v(i2) \rightarrow r = 0 \qquad (1)$$
$$v(i2) \leq v(i) \leq R4 \rightarrow r = 1 \qquad (2)$$

Ideal photoelectric conversion characteristics with respect to the light intensity i are such that the output value increases in linearly proportion to the light intensity i as indicated by the characteristic data represented by W(i) in FIG. 4. Therefore, the first corrective data gr to be stored in the second RAM 38 and the second corrective data log Pr to be stored in the third RAM 40 may be selected such that they convert the linear data V1(i) and V2(i) into the reference data W(i) (hereinafter referred to as "ideal photoelectric conversion characteristic data") corresponding to the ideal photoelectric conversion characteristics.

Now, equations for converting the linear data V1(i) and V2(i) into the ideal photoelectric conversion characteristic data W(i) are derived. A conversion equation is first determined when the value of the digital image data v(i) with respect to the light intensity i is v(i2) or higher and R4 or smaller. The linear data V2(i) passing through the coordinates B, C are determined according to the following equation (3) as is well known in the art:

$$V2(i) = \frac{v(i3) - v(i2)}{i3 - i2} i + \frac{i3 \cdot v(i2) - i2 \cdot v(i3)}{i3 - i2} \qquad \cdots (3)$$

Then, in order to convert the coordinates on the linear data V2(i) into coordinates on the ideal photoelectric conversion characteristic data W(i) expressed according to the equation (4), the equation (3) is first solved for the light intensity i, and then the light intensity i is substituted into the equation (4), thus obtaining the equation (5) (the reference characters i4 indicate the light intensity corresponding to the bright level as shown in FIG. 4):

$$W(i) = \frac{R4}{i4} i = \frac{R3}{i3} i \qquad (4)$$

$$W(i) = \frac{R4}{i4} i = \frac{R3}{i3} i \qquad \cdots (4)$$

$$W(i) = \frac{R3}{i3} \cdot \frac{i3 - i2}{v(i3) - v(i2)} \times \left\{ V2(i) + \frac{i2 \cdot v(i3) - i3 \cdot v(i2)}{i3 - i2} \right\} \qquad \cdots (5)$$

If it is assumed in the equation (5) that the light intensity i2 is indicated by i2 = R2, the light intensity i3 is indicated by i3 = R3, the linear data V2(i) are indicated by V2(i) = v(i), and the ideal photoelectric conversion characteristic data W(i) are indicated by W(i) = V2(i), then the linear data V2(i) after being corrected can be obtained from the digital image data v(i) before being corrected, according to the following equation (6) (R2 and R3 are values of the ideal photoelectric conversion characteristic data W(i) at the light intensities i2, i3, respectively):

$$V2(i) = \frac{R3 - R2}{v(i3) - v(i2)}$$

$$\times \left\{v(i) + \frac{R2 \cdot v(i3) - R3 \cdot v(i2)}{R3 - R2}\right\} \quad \cdots (6)$$

where $i2 \leqq i \leqq i4$.

When the region indicating data r are $r = 0$, i.e., when the digital image data $v(i)$ with respect to the light intensity i are smaller than $v(i2)$, the linear data $V1(i)$ after being corrected are similarly given according to the following equation (7):

$$V1(i) = \frac{R2 - R1}{v(i2) - v(i1)}$$

$$\times \left\{v(i) + \frac{R1 \cdot v(i2) - R2 \cdot v(i1)}{R2 - R1}\right\} \quad \cdots (7)$$

where $0 \leqq i < i2$.

As can be understood from the equations (6) and (7), in order to correct the digital image data $v(i)$ corresponding to the output signal from the CCD image sensor 22 for thereby obtaining a linear photoelectrically converted value of ideal characteristics, the first corrective data qr and corrective data Pr may be introduced and an arithmetic operation as indicated by the following equation (8) may be carried out:

$V(i) = Pr \times \{v(i) + qr\}$     (8)

To implement the calculation expressed by the equation (8) with hardware, a logarithmic operation is effected to convert the multiplication into an addition, as indicated by the following equation (9):

$\log V(i) = \log [Pr = \{v(i) + qr\}]$

$= \log Pr + \log \{v(i) + qr\}$     (9)

Therefore, depending on the region of the digital image data $v(i)$, the region indicating data r, the first corrective data qr, and the second corrective data $\log Pr$ are defined according to Table below:

Table

| Input light intensity level i | $0 \leqq i < i2$ | $i2 \leqq i \leqq i4$ |
|---|---|---|
| Region of $v(i)$ | $0 \leqq v(i) < (i2)$ | $v(i1) \leqq v(i) \leqq R4$ |
| Region indicating data r | 0 | l |
| 1st corrective data qr | q0 | ql |
| 2nd corrective data $\log Pr$ | $\log P0$ | $\log Pl$ |

It will be understood that the first corrective data q0, q1 and the second corrective data $\log P0$, $\log P1$ can be expressed by the following equations (10) through (13) with reference to the equations (6) through (9):

$$q0 = \frac{R1 \cdot v(i2) - R2 \cdot v(i1)}{R2 - R1} \qquad \cdots (10)$$

$$\log P0 = \log \left\{ \frac{R2 - R1}{v(i2) - v(i1)} \right\} \qquad \cdots (11)$$

$$q1 = \frac{R2 \cdot v(i3) - R3 \cdot v(i2)}{R3 - R2} \qquad \cdots (12)$$

$$\log P1 = \log \left\{ \frac{R3 - R2}{v(i3) - v(i2)} \right\} \qquad \cdots (13)$$

In the signal corrector 28 shown in FIG. 3, the region indicating data r, the first corrective data qr, and the second corrective data log Pr may be stored respectively in the first, second, and third RAMs 36, 38, 40. It can be seen that the structure of the signal corrector 28 is effective to carry out the arithmetic operation represented by the equation (9).

The number of first corrective data qr to be stored in the second RAM 38 and second corrective data log Pr to be stored in the third RAM 40 is two each for one photoelectric transducer of the CCD image sensor 22. As a whole, therefore, the number of the data may be twice the number n of photoelectric transducers Pa used. Accordingly, the memory capacity required to store the data is reduced to (2/quantizing levels) according to the method of the present invention, whereas data corresponding to all quantizing levels of the A/D converter are required to be stored according to the conventional image signal correcting method.

After the first and second corrective data qr, log Pr have been established, the ND filter 20 is removed from the path of the transmitted light Ls, the transparent original So is replaced with the image-bearing original S, and the image on the original S is read. More specifically, the transmitted light Ls bearing image information, from the original S illuminated by the light source 12, is applied through the mirror 16 and the condenser lens 18 to the CCD image sensor 22. The CCD image sensor 2w then applies a photoelectrically converted signal corresponding to the intensity of the transmitted light Ls to the amplifier 24. The amplification factor of the amplifier 24 is selected in advance such that the maximum intensity of the transmitted light Ls corresponds to the full scale voltage of the A/D converter 26. The signal bearing image information, which is amplified by the amplifier 24, is converted into digital image data v(i) by the A/D converter 26. The first RAM 36 of the signal corrector 28 determines whether the value of the digital image data v(i) is smaller than the value v(i2) or equal to or greater than the value v(i2), and then supplies the binary region indicating data r, which is 0 or 2, to the second and third RAMs 38, 40, as indicated in Table above.

Based on the supplied region indicating data r, the second and third RAMs 38, 40 supply the first and second corrective data qr, log Pr, respectively, to one input terminal of the first and second adders 42, 44, respectively. Since the other input terminal of the first adder 42 is supplied with the digital image data v(i), the first adder 42 produces output data v(i) + qr which are then converted into a logarithmic value log {v(i) + qr} by the LOG table 46. The logarithmic value is then sent to the other input terminal of the second adder 44.

The second adder 44 adds the data log {v(i) + qr} and the second corrective data log Pr, thus providing a logarithmic signal log V(i) represented by the equation (9). The logarithmic signal log V(i) is then processed for gradation correction, edge sharpness, etc. by the signal processor 30, and the processed signal is transmitted to the halftone dot image signal generator 32. Depending on the transmitted image data, the halftone dot image signal generator 32 generates a pulse-width-modulated binary signal and applies the pulse-width-modulated binary signal to the laser scanner 34. The laser scanner 34 emits a laser beam LF corresponding to the binary signal to record an image on the photographic film F.

In this embodiment, since the image signal produced by the CCD image sensor 22 is converted so as to have ideal photoelectric conversion characteristics by the signal corrector 28, the shading in the reading optical system, e.g., cosine law characteristics of the condenser lens, is corrected, and the offset levels corresponding to the dark currents of the photoelectric transducers Pa of the CCD image sensor and the linearities of the photoelectric transducers Pa are also corrected. Consequently, the image which is made visible by development of the photographic film F is of a very high quality.

While the image signal correcting method of the invention is applied to the image signal produced from the transmissive original, it may also be applied to the image signal produced from a reflective original.

8

In the above embodiment, three corrective original data are produced by the ND filter 20 and corrective data are produced using the corrective original data. However, the ND filter 20 may be divided into more than three filters to produce more than three corrective original data, so that the image signal can be corrected more accurately.

With the present invention, as described above, when image information is read using the image sensor, cor rective data are produced in view of the fact that the photoelectric conversion characteristics of the image sensor can be approximated by straight line segments, and the corrective data are stored in memory means for the correction of an image signal that is photoelectrically converted from the image information. Because the photoelectric conversion characteristics are approximated, the capacity of IC memories for use as the memory means or RAMs can be greatly reduced. Differences between dark output voltages and linearities of the photoelectric transducers of the image sensor are eliminated, and shading in the optical system is corrected, with the result that a high-quality image can be reproduced from the corrected image signal.

Although a certain preferred embodiment has been shown and described, it should be understood that many changes and modifications may be made therein without departing from the scope of the appended claims.


## Claims

1. A method of correcting an image signal in an apparatus for irradiating an original with illuminating light from a light source and applying light reflected or transmitted from the original to an image sensor to read an image on the original, said method comprising the steps of:
applying a plurality of successive different intensities of either light reflected from a white original irradiated with the illuminating light from the light source, or illuminating light directly from the light source, or transmitted light from a transparent original irradiated with the illuminating light from the light source, to the image sensor;
converting an output signal from the image sensor into a digital signal to produce as many corrective original data as the number of said successive different intensities;
then producing corrective data from said corrective original data and reference data;
reading an image on an original with the image sensor to produce an image signal and converting the image signal into digital image data; and
producing corrected image data from said digital image data and said corrective data.

2. A method according to claim 1, wherein three successive different intensities are applied to the image sensor, said corrective original data are three data corresponding to the three successive different intensities, said corrective data are produced from said three successive different intensities and said reference data.

3. A method according to claim 2, wherein said corrective data are produced from data represented by two straight line segments and approximating said three corrective original data, and said reference data.

# FIG.1a

# FIG.1b

# FIG.2

# FIG.3

# FIG.4